# EUROPEAN PATENT SPECIFICATION

(11) **EP 4 116 110 B1**
(45) Date of publication and mention of the grant of the patent: **29.05.2024**
(21) Application number: 22181508.7
(22) Date of filing: 28.06.2022
(51) Int. Cl.: B60C 11/24

(54) **REAL-TIME TIRE MONITORING SYSTEM**
ECHTZEIT-REIFENÜBERWACHUNGSSYSTEM
SYSTÈME DE SURVEILLANCE DE PNEU EN TEMPS RÉEL

(30) Priority: 08.07.2021 US 202117370734
(43) Date of publication of application: 11.01.2023
(73) Proprietor: Volvo Car Corporation, 40531 Göteborg (SE)
(72) Inventor: Tyagi, Prakhar, Göteborg (SE); Worth, Robin, Göteborg (SE); He, Mingzhe, Xi'an City (CN); Lin, Xinyu, Shanghai (CN)
(74) Representative: Maiwald GmbH

(56) References cited:
- EP-A1- 2 982 521
- WO-A1-2020/041899
- WO-A1-2020/122188
- WO-A1-2020/203233
- WO-A1-2020/205703
- WO-A1-2021/079838
- US-A1- 2015 057 877
- US-A1- 2015 239 298
- US-A1- 2019 001 757
- US-A1- 2019 255 891
- US-A1- 2021 181 064

## Description

### BACKGROUND

One or more embodiments herein relate to tire wear monitoring, and more specifically, to real-time tire wear monitoring for fleet & autonomous vehicles.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, computer-implemented methods, and/or computer program products that facilitate real-time tire wear monitoring.

Tires play a critical role in vehicle safety and performance. In order for tires to perform optimally and according to manufacturer specifications, tires must be properly inflated and replaced when the tread of a tire becomes too worn. However, vehicle owners or fleet managers often forget or neglect to monitor tire wear as it is often an afterthought. Further, checking tire/tread wear can be tedious, as it typically requires using a measuring device (e.g., calipers or tread depth gauge) or even a coin to obtain a tread depth estimate. Some existing solutions utilize sensors to estimate tire wear. Such solutions, however, do not provide real-time monitoring. Further, existing solutions do not aggregate or provide tire wear information for a group of vehicles. Therefore, there exists a need to better monitor and/or manage vehicle tire wear, particularly for fleet and/or autonomous vehicles. US 2019/255891 A1, US 2021/181064 A1, WO 2020/205703 A1, WO 2021/079838 A1, EP 2 982 521 A1, US 2015/239298 A1, WO 2020/041899 A1 describe a device according to the preamble of claim 1.

According to an embodiment, a device comprises a memory, and a processor operatively coupled to the memory and comprising computer executable components comprising: a determination component that determines wear state information representative of a wear state of a tire of a vehicle based on an output from a sensor of the vehicle, and an alert component that, in response to the wear state of the tire being determined to exceed a tire wear threshold, generates an alert signal associated with the wear state of the tire, wherein the sensor comprises a brake force sensor, and wherein the output comprises a braking force applied to the vehicle.

According to another embodiment, a computer-implemented method comprises determining, by a device comprising a processor, wear state information representative of a wear state of a tire of a vehicle based on an output from a sensor of the vehicle, and in response to the wear state of the tire being determined to exceed a tire wear threshold, generating, by the device, an alert signal associated with the wear state of the tire, wherein the sensor comprises a brake force sensor, and wherein the output comprises a braking force applied to the vehicle.

According to yet another embodiment, a non-transitory machine-readable medium, comprising executable instructions that, when executed by a processor, facilitate performance of operations, comprising determining wear state information representative of a wear state of a tire of a vehicle based on an output from a sensor of the vehicle, and in response to the wear state of the tire being determined to exceed a tire wear threshold, generating an alert signal associated with the wear state of the tire, wherein the sensor comprises a brake force sensor, and wherein the output comprises a braking force applied to the vehicle.

### DESCRIPTION OF THE DRAWINGS

FIG. 1 illustrates a block diagram of an example, non-limiting tire wear monitoring system in accordance with one or more embodiments described herein.
FIG. 2 illustrates a block diagram of an example, non-limiting tire wear monitoring system in accordance with one or more embodiments described herein.
FIG. 3 illustrates a block diagram of an example, non-limiting tire wear monitoring system in accordance with one or more embodiments described herein.
FIG. 4 illustrates a block diagram of an example, non-limiting tire wear monitoring system in accordance with one or more embodiments described herein.
FIG. 5 illustrates a block diagram of an example, non-limiting tire wear monitoring system in accordance with one or more embodiments described herein.
FIG. 6 illustrates a block diagram of an example, non-limiting tire wear monitoring system in accordance with one or more embodiments described herein.
FIG. 7 illustrates a block diagram of an example, non-limiting tire wear monitoring system in accordance with one or more embodiments described herein.
FIG. 8 illustrates an example, non-limiting tire wear monitoring system dashboard in accordance with one or more embodiments described herein.
FIG. 9 illustrates an example, non-limiting tire wear monitoring system dashboard in accordance with one or more embodiments described herein.
FIG. 10 illustrates a flowchart of an example tire wear monitoring process in accordance with one or more embodiments described herein.
FIG. 11 illustrates a block diagram of an example, non-limiting tire wear monitoring system in accordance with one or more embodiments described herein.
FIG. 12 illustrates a flow diagram of exemplary operations for tire wear monitoring as facilitated by a non-transitory machine-readable medium in accordance with one or more embodiments described herein.
FIG. 13 illustrates a flow diagram of an exemplary tire wear monitoring process in accordance with one or more embodiments described herein.
FIG. 14 is an example, non-limiting computing environment in which one or more embodiments described herein can be implemented.
FIG. 15 is an example, non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

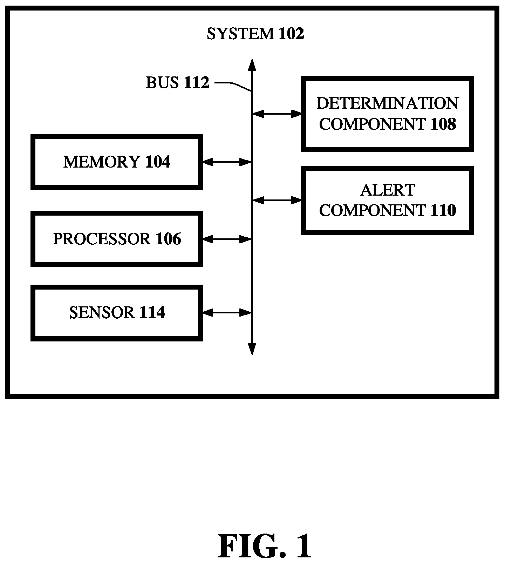

FIG. 1 illustrates a block diagram of an example, non-limiting system 102 in accordance with one or more embodiments described herein. System 102 can comprise a memory 104, a processor 106, a determination component 108, an alert component 110, a bus 112, and/or sensor 114. In various embodiments, one or more of the memory 104, processor 106, determination component 108, alert component 110, bus 112, and/or sensor 114 can be communicatively or operably coupled to one another to perform one or more functions of the system 102.

According to an embodiment, the sensor 114 can comprise one or more of a variety of sensors. For instance, the sensor 114 can comprise a wheel speed sensor which can output a rotational velocity of a tire. According to an embodiment, wheel speed sensors can be utilized to indirectly determine tire pressure. In such embodiments, the sensor 114 (e.g., wheel speed sensor) can comprise an indirect tire pressure sensor. According to another embodiment, the sensor 114 can comprise a direct tire pressure sensor which can output measured tire pressure. According to another embodiment, the sensor 114 can comprise a linear velocity sensor which can output lateral and longitudinal velocity of a vehicle. According to yet another embodiment, the sensor 114 can comprise a brake force sensor which can output a braking force applied to a vehicle. It is noted that any of the sensors 114 can output information in real-time (e.g., to a corresponding vehicle or system 102).

According to an embodiment, the determination component 108 can determine wear state information representative of a wear state of a tire of a vehicle. In an embodiment, the wear state information can be output from a sensor of the vehicle and received by the system 102. It is noted that the determination component can aggregate outputs from a plurality of sensors 114, including a one or more of the variety of different types of sensors 114 as previously discussed. It is noted that the determination component 108 can determine the wear state information in real-time (e.g., as the sensor 114 generates output(s)).

According to an embodiment, the determination component 108 can utilize a tire wear model as would be understood by one skilled in the art. In this regard, the determination component 108 can utilize a tire wear estimation algorithm in order to determine or otherwise estimate tire wear based on one or more outputs from one or more sensors 114.

According to an embodiment, the alert component 110 can generate an alert signal associated with a wear state of a tire in response to the wear state of the tire being determined to exceed a tire wear threshold. Such tire wear thresholds can be defined (e.g., according to manufacturer specifications, fleet policies, governmental regulations, or otherwise defined) or can be determined for specific applications. For instance, a tire wear threshold can exist for each tire-vehicle combination (e.g., a Tire Brand/Model X and Vehicle Y pairing). Further, tire wear thresholds can differ for each axle (e.g., front or rear) and/or for each side of a vehicle. In an embodiment, the wear thresholds can vary according to region or climate. For instance, a region that experiences snow or rain (e.g., resulting in standing water) can comprise respective tire wear thresholds. It is noted that such tire wear thresholds can be determined using a lookup table that incorporates various factors (e.g., tire make, tire model, tire size, tire age, vehicle manufacturer, vehicle model, vehicle sub-model, vehicle trim, vehicle engine, vehicle weight, vehicle age, climate, region, driving style, driving skill, intended use, economic factors, or other suitable factors).

According to an embodiment, the alert signal can comprise information representative of the wear exceeding the tire wear threshold, or of remaining tread depth or percentage being below a corresponding threshold. It is noted that the alert signal can be sent to a corresponding vehicle (e.g., in real-time coinciding with the sensor 114 outputting raw data and the determination component 108 determining tire wear information) as later discussed in greater detail.

According to an embodiment, the alert signal can be context-driven. In this regard, alert information or an alert signal can be associated with weather information (e.g., raining or snowing), as standing water or snow can be increasingly dangerous for worn tires.

Memory 104 can store one or more computer/machine readable and/or executable components and/or instructions that, when executed by processor 106 (e.g., a classical processor, a quantum processor, etc.), can facilitate performance of operations defined by the executable component(s) and/or instruction(s). For example, memory 104 can store computer and/or machine readable, writable, and/or executable components and/or instructions that, when executed by processor 106, can facilitate execution of the various functions described herein relating to system 102, determination component 108, alert component 110, or other components (e.g., as later described herein). Memory 104 can comprise volatile memory (e.g., random access memory (RAM), static RAM (SRAM), dynamic RAM (DRAM), etc.) and/or non-volatile memory (e.g., read only memory (ROM), programmable ROM (PROM), electrically programmable ROM EPROM), electrically erasable programmable ROM (EEPROM), etc.) that can employ one or more memory architectures. It can be appreciated that the memory 104 can store data herein.

Processor 106 can comprise one or more types of processors and/or electronic circuitry (e.g., a classical processor, graphics processor, a quantum processor, etc.) that can implement one or more computer and/or machine readable, writable, and/or executable components and/or instructions that can be stored on memory 104. For example, processor 106 can perform various operations that can be specified by such computer and/or machine readable, writable, and/or executable components and/or instructions including, but not limited to, logic, control, input/output (I/O), arithmetic, and/or the like. In some embodiments, processor 106 can comprise one or more central processing unit, multi-core processor, microprocessor, dual microprocessors, microcontroller, System on a Chip (SOC), array processor, vector processor, quantum processor, and/or another type of processor.

Bus 112 can comprise one or more memory bus, memory controller, peripheral bus, external bus, local bus, a quantum bus, and/or another type of bus that can employ various bus architectures (e.g., industrial standard architecture (ISA), extended ISA (EISA), micro-channel architecture (MSA), intelligent drive electronics (IDE), advanced graphics port (AGP), VESA local bus (VLB), peripheral component interconnect (PCI), universal serial bus (USB), card bus, small computer systems interface (SCSI), firewire (IEEE 1394), etc.).

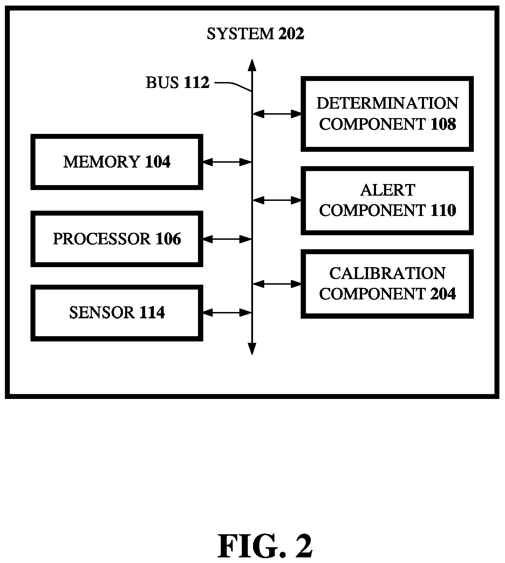

FIG. 2 illustrates a block diagram of an example, non-limiting system 202 in accordance with one or more embodiments described herein. System 202 can be similar to system 102, and can comprise a memory 104, processor 106, determination component 108, alert component 110, bus 112, and/or sensor 114. Repetitive description of like elements and/or processes employed in respective embodiments is omitted for sake of brevity.

System 202 can additionally comprise a calibration component 204. In various embodiments, one or more of the memory 104, processor 106, determination component 108, alert component 110, bus 112, sensor 114, and/or calibration component 204 can be communicatively or operably coupled to one another to perform one or more functions of the system 202.

According to an embodiment, the calibration component 204 can calibrate one or more components of the system 202. For instance, the calibration component 204 can calibrate the sensor 114. This can be particularly useful, for instance, when the sensor 114 comprises an indirect tire pressure sensor. In this regard, the calibration component 204 can determine actual measured tire pressure (e.g., using a pressure gauge removably coupled to a vehicle associated with the system 202). In an embodiment, the calibration component 204 can be communicatively coupled to such a tire pressure gauge. In other embodiments, the calibration component 204 can comprise such a tire pressure gauge. According to an embodiment, the calibration component 204 can be utilized in order to reduce inaccuracies in tire wear determination or estimation. Such calibration can be beneficial, for instance, because both indirect tire pressure determination and tire wear determination can be based on rotational velocity of a tire, and thus incorrect tire pressure can adversely impact accurate determination of tire wear. It is noted that the calibration component 204 can adjust the sensor 114 to known pressure information (e.g., as received from a calibration device).

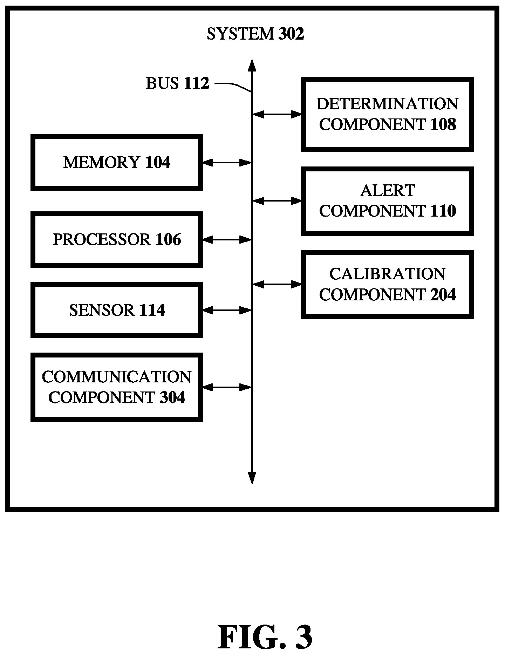

FIG. 3 illustrates a block diagram of an example, non-limiting system 302 in accordance with one or more embodiments described herein. System 302 can be similar to system 202, and can comprise a memory 104, processor 106, determination component 108, alert component 110, bus 112, sensor 114, and/or calibration component 204. Repetitive description of like elements and/or processes employed in respective embodiments is omitted for sake of brevity.

System 302 can additionally comprise a communication component 304. In various embodiments, one or more of the memory 104, processor 106, determination component 108, alert component 110, bus 112, sensor 114, calibration component 204, and/or communication component 304 can be communicatively or operably coupled to one another to perform one or more functions of the system 302.

According to an embodiment, the communication component 304 can transmit an alert signal (e.g., indicative of tire wear exceeding a tire wear threshold) to a vehicle associated with the system 302. The foregoing transmission can facilitate real-time notification of the alert to the vehicle so that a driver or passenger of the vehicle can immediately receive corresponding information indicative of the tire wear state. This can increase safety of an associated vehicle, as a driver can then service the vehicle (e.g., replace worn tires) as quickly as possible. According to another embodiment, the communication component can transmit such wear state information to a repair facility registered with the vehicle or the system 302. In this regard, such a repair facility can receive advance notice of the wear state information and/or the alert signal. According to an embodiment, such repair facilities can be user-configured (e.g., for registration) or can be manufacturer defined. It is noted that a fleet owner/manager can update registration of such repair facilities. The foregoing can result in a repair facility having additional time to prepare for an appointment, which can reduce vehicle downtime and increase profitability, particularly for a fleet or autonomous vehicle.

According to an embodiment, the communication component 304 can comprise the hardware required to implement a variety of communication protocols (e.g., infrared ("IR"), shortwave transmission, near-field communication ("NFC"), Bluetooth, Wi-Fi, long-term evolution ("LTE"), 3G, 4G, 5G, global system for mobile communications ("GSM"), code-division multiple access ("CDMA"), satellite, visual cues, radio waves, etc.)

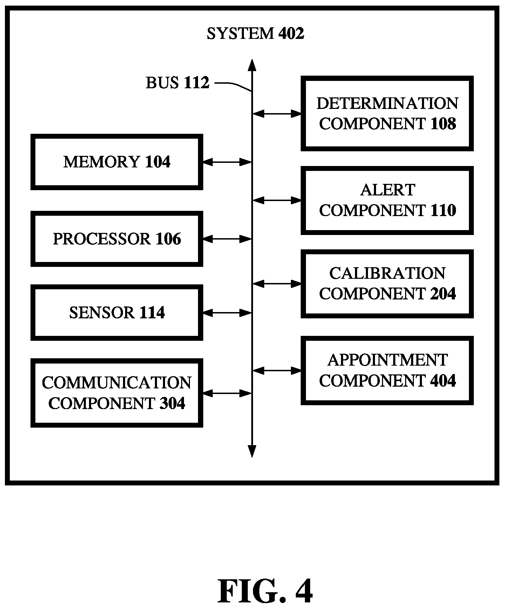

FIG. 4 illustrates a block diagram of an example, non-limiting system 402 in accordance with one or more embodiments described herein. System 402 can be similar to system 302, and can comprise a memory 104, processor 106, determination component 108, alert component 110, bus 112, sensor 114, calibration component 204, and/or communication component 304. Repetitive description of like elements and/or processes employed in respective embodiments is omitted for sake of brevity.

System 402 can additionally comprise an appointment component 404. In various embodiments, one or more of the memory 104, processor 106, determination component 108, alert component 110, bus 112, sensor 114, calibration component 204, communication component 304, and/or appointment component 404 can be communicatively or operably coupled to one another to perform one or more functions of the system 402.

According to an embodiment, the appointment component 404 can generate an appointment for the vehicle at the repair facility (e.g., repair facility discussed above) for replacement of the tire (e.g., tire with determined tire wear exceeding a tire wear threshold) with a replacement tire. In this regard, the appointment component 404 can determine availability information associated with the repair facility in order to generate the appointment. It is noted that the appointment component 404 can determine availability information for a plurality of repair facilities associated with the system 402 or a corresponding vehicle. In this regard, the appointment component 404 can select a repair facility / appointment according to an appointment function, which can utilize, for instance, repair facility distances, availabilities, customer reviews, prices, or other information in order to determine an optimal appointment. The foregoing can result in a repair facility having additional time to prepare for an appointment, which can reduce vehicle downtime and increase profitability, particularly for a fleet or autonomous vehicle.

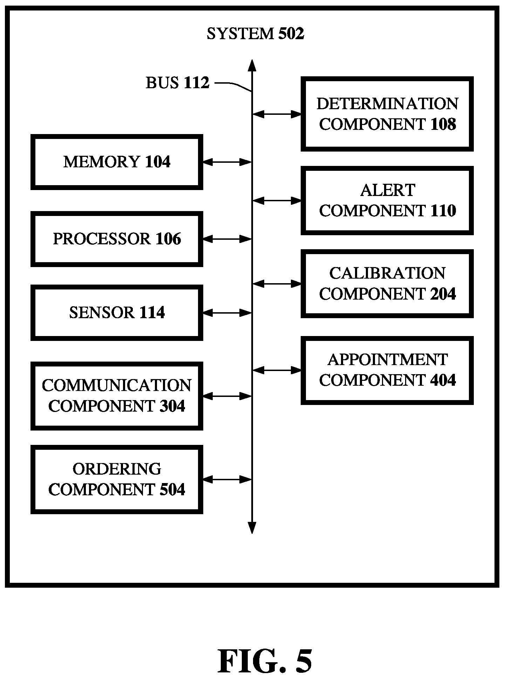

FIG. 5 illustrates a block diagram of an example, non-limiting system 502 in accordance with one or more embodiments described herein. System 502 can be similar to system 402, and can comprise a memory 104, processor 106, determination component 108, alert component 110, bus 112, sensor 114, calibration component 204, communication component 304, and/or appointment component 404. Repetitive description of like elements and/or processes employed in respective embodiments is omitted for sake of brevity.

System 502 can additionally comprise an ordering component 504. In various embodiments, one or more of the memory 104, processor 106, determination component 108, alert component 110, bus 112, sensor 114, calibration component 204, communication component 304, appointment component 404, and/or ordering component 504 can be communicatively or operably coupled to one another to perform one or more functions of the system 502.

According to an embodiment, the ordering component 504 can generate generates an order for the replacement tire. According to an embodiment, the appointment can be based on an availability information representative of an availability of the replacement tire (e.g., in addition to scheduling availability associated with one or more repair facilities). The ordering component 504 can determine an appropriate tire to order for a vehicle associated with the system 502. For instance, the ordering component 504 can determine or access tire specifications associated with the system 502 or a corresponding vehicle. In other embodiments, the ordering component 504 can be configured to generate an order according to fleet management specifications. For instance, the ordering component 504 can be updated (e.g., in real-time using the communication component) with one or more tire ordering directives. For instance, the ordering component 504 can order a replacement tire (or replacement set of tires) from a designated repair facility. The ordering component 504 can additionally order a preferred tire (e.g., tire make/model). The ordering component 504 can order a backup tire make/model (e.g., if such a preferred tire is not available). A hierarchy of preferred tires, facilities, or other preferences can be defined (e.g., according to fleet policies or otherwise configured). The foregoing can result in a repair facility having additional time to prepare for an appointment (e.g., have replacement tire ready and waiting), which can reduce vehicle downtime and increase profitability, particularly for a fleet or autonomous vehicle.

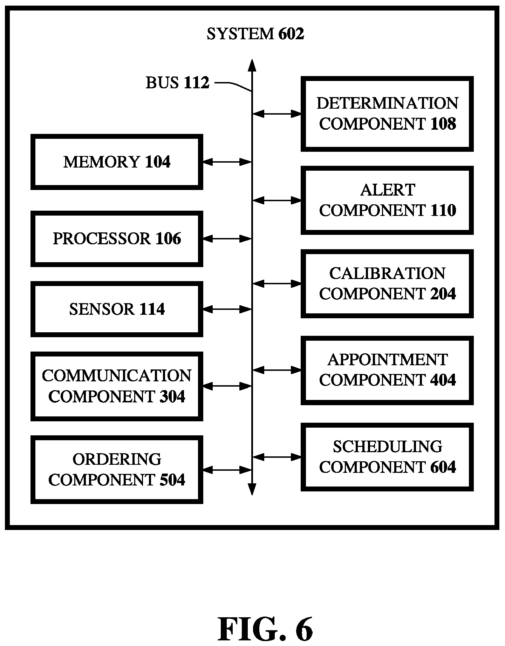

FIG. 6 illustrates a block diagram of an example, non-limiting system 602 in accordance with one or more embodiments described herein. System 602 can be similar to system 502, and can comprise a memory 104, processor 106, determination component 108, alert component 110, bus 112, sensor 114, calibration component 204, communication component 304, appointment component 404, and/or ordering component 504. Repetitive description of like elements and/or processes employed in respective embodiments is omitted for sake of brevity.

System 602 can additionally comprise a scheduling component 604. In various embodiments, one or more of the memory 104, processor 106, determination component 108, alert component 110, bus 112, sensor 114, calibration component 204, communication component 304, appointment component 404, ordering component 504, and/or scheduling component 604 can be communicatively or operably coupled to one another to perform one or more functions of the system 602.

According to an embodiment, the scheduling component 604 can determine schedule information representative of a schedule associated with the vehicle. In this regard, appointments herein can be further based on the schedule. It is noted that the schedule associated with the vehicle can comprise a schedule associated with a user of the vehicle. In other embodiments, the schedule can comprise, for instance, a maintenance/service schedule for the vehicle. According to an embodiment, the scheduling component can compare repair facility availability (e.g., as determined using the appointment component 404), tire availability (e.g., as determined using the ordering component 504), and user and/or vehicle availability (e.g., as determined using the scheduling component 604) in order to schedule an appointment that is compatible with all required parties (e.g., user / driver / fleet operator, vehicle, and/or repair facility). According to an embodiment, the scheduling component 604 can access a mobile device associated with a user of a vehicle (e.g., as associated with the system 602 and/or using the communication component 304). In this regard, availability of a user can be determined based on calendar information residing on a mobile device associated with said user. In other embodiments, the scheduling component 604 can be registered with an internet calendar in order to ascertain such availability information. The foregoing can result in a repair facility having additional time to prepare for an appointment, which can reduce vehicle downtime and increase profitability, particularly for a fleet or autonomous vehicle.

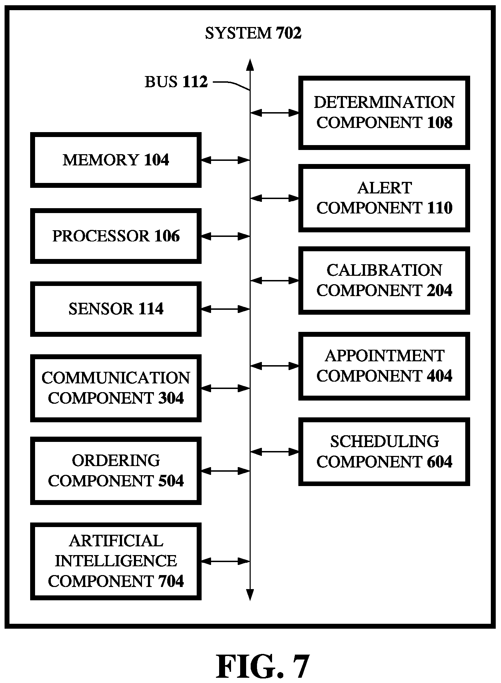

FIG. 7 illustrates a block diagram of an example, non-limiting system 702 in accordance with one or more embodiments described herein. System 702 can be similar to system 602, and can comprise a memory 104, processor 106, determination component 108, alert component 110, bus 112, sensor 114, calibration component 204, communication component 304, appointment component 404, ordering component 504, and/or scheduling component 604. Repetitive description of like elements and/or processes employed in respective embodiments is omitted for sake of brevity.

System 702 can additionally comprise an artificial intelligence component 704. In various embodiments, one or more of the memory 104, processor 106, determination component 108, alert component 110, bus 112, sensor 114, calibration component 204, communication component 304, appointment component 404, ordering component 504, scheduling component 604, and/or artificial intelligence component 704 can be communicatively or operably coupled to one another to perform one or more functions of the system 702.

Artificial-intelligence or machine learning systems and techniques can be employed (e.g., using the artificial intelligence component 704) to facilitate learning user behavior, context-based scenarios, preferences, etc. in order to facilitate taking automated action with high degrees of confidence. Utility-based analysis can be utilized to factor benefit of taking an action against cost of taking an incorrect action. Probabilistic or statistical-based analyses can be employed in connection with the foregoing and/or the following.

According to an embodiment tire wear state information can be determined by the determination component 108 using a tire wear model generated using machine learning (e.g., by the artificial intelligence component 704 as applied to past tire wear information representative of tire wear of other tires.)

According to an embodiment, the artificial intelligence component 704 can learn to determine tire wear thresholds herein. For instance, the artificial intelligence component 704 can learn safety information associated with various factors (e.g., tire make, tire model, tire size, tire age, vehicle manufacturer, vehicle model, vehicle sub-model, vehicle trim, vehicle engine, vehicle weight, vehicle age, climate, region, driving style, driving skill, intended use, economic factors, or other suitable factors) in order to determine appropriate respective tire wear thresholds.

According to an embodiment, the artificial intelligence component 704 can generate a tire wear model (e.g., comprising a tire wear estimation algorithm) in order to determine tire wear based on one or more outputs from one or more sensors 114.

According to an embodiment, the artificial intelligence component 704 can learn to calibrate one or more sensors 114. In this regard, the artificial intelligence component 704 can utilize previous tire calibrations of previous tires to learn various outputs from sensors 114 (e.g., wheel speeds) in order to determine whether a wheel speed variation is due to tire wear or due to improper tire inflation (or due to another factor).

According to an embodiment, the artificial intelligence component 704 can learn to determine optimal repair facilities (e.g., with which to generate an appointment, place a replacement tire order, etc.) In this regard, the artificial intelligence component 704 can evaluate and/or update data associated with one or more repair facilities based on repair facility distances, availabilities, customer reviews, prices, or other information in order to determine an optimal appointment and learn to determine an optimal repair facility. In other embodiments, the artificial intelligence component 704 can learn preferences associated with the system 702, or associated vehicles or vehicle fleets in order to determine an optimal repair facility.

According to an embodiment, the artificial intelligence component 704 can learn to determine optimal vehicle performance (e.g., as associated with various tire makes/models). In this regard, the artificial intelligence component 704 can determine an optimal tire or replacement tire for a vehicle. In further embodiments, the artificial intelligence component 704 can recommend an update to a fleet policy (e.g., in response to a different tire being determined to be optimal for a vehicle).

According to an embodiment, the artificial intelligence component 704 can learn preferences associated with a user of a vehicle associated with the system 702. In this regard, the artificial intelligence component 704 can learn user or vehicle habits (e.g., as associated with user calendar information) in order to determine an optimal appointment for a repair.

For example, artificial intelligence component 704 can comprise and/or employ an artificial intelligence (AI) model and/or a machine learning (ML) model that can learn to perform the above or below described functions (e.g., via training using historical training data and/or feedback data).

In some embodiments, artificial intelligence component 704 can comprise an AI and/or ML model that can be trained (e.g., via supervised and/or unsupervised techniques) to perform the above-described functions using historical training data comprising various context conditions. In this example, such an AI and/or ML model can further learn (e.g., via supervised and/or unsupervised techniques) to perform the above-described functions using training data comprising feedback data, where such feedback data can be collected and/or stored (e.g., in memory 104) by artificial intelligence component 704. In this example, such feedback data can comprise the various instructions described above/below that can be input, for instance, to a system 702, over time in response to observed/stored context-based information. In some embodiments, based on learning to perform the functions described above, artificial intelligence component 704 can perform such functions in the same manner and/or using the same resources as those of determination component 108, alert component 110, bus 112, sensor 114, calibration component 204, communication component 304, appointment component 404, ordering component 504, and/or scheduling component 604.

Artificial intelligence component 704 can initiate an operation based on a defined level of confidence determined using information (e.g., feedback data). For example, based on learning to perform such functions described above using the above defined feedback data, artificial intelligence component 704 can initiate an operation if it determines, based on such feedback data, that a wear state of a tire is below a safe tread amount remaining. For instance, based on learning to perform such functions described above using the above defined feedback data, artificial intelligence component 704 can determine appropriate corresponding actions.

In an embodiment, artificial intelligence component 704 can perform a utility-based analysis that factors cost of initiating the above-described operations versus benefit. In this embodiment, artificial intelligence component 704 can use one or more additional context conditions to determine whether any action should be taken.

To facilitate the above-described functions, artificial intelligence component 704 can perform classifications, correlations, inferences, and/or expressions associated with principles of artificial intelligence. For instance, artificial intelligence component 704 can employ an automatic classification system and/or an automatic classification. In one example, artificial intelligence component 704 can employ a probabilistic and/or statistical-based analysis (e.g., factoring into the analysis utilities and costs) to learn and/or generate inferences. Artificial intelligence component 704 can employ any suitable machine-learning based techniques, statistical-based techniques and/or probabilistic-based techniques. For example, artificial intelligence component 704 can employ expert systems, fuzzy logic, support vector machines (SVMs), Hidden Markov Models (HMMs), greedy search algorithms, rule-based systems, Bayesian models (e.g., Bayesian networks), neural networks, other non-linear training techniques, data fusion, utility-based analytical systems, systems employing Bayesian models, and/or the like. In another example, artificial intelligence component 704 can perform a set of machine learning computations. For instance, artificial intelligence component 704 can perform a set of clustering machine learning computations, a set of logistic regression machine learning computations, a set of decision tree machine learning computations, a set of random forest machine learning computations, a set of regression tree machine learning computations, a set of least square machine learning computations, a set of instance-based machine learning computations, a set of regression machine learning computations, a set of support vector regression machine learning computations, a set of k-means machine learning computations, a set of spectral clustering machine learning computations, a set of rule learning machine learning computations, a set of Bayesian machine learning computations, a set of deep Boltzmann machine computations, a set of deep belief network computations, and/or a set of different machine learning computations.

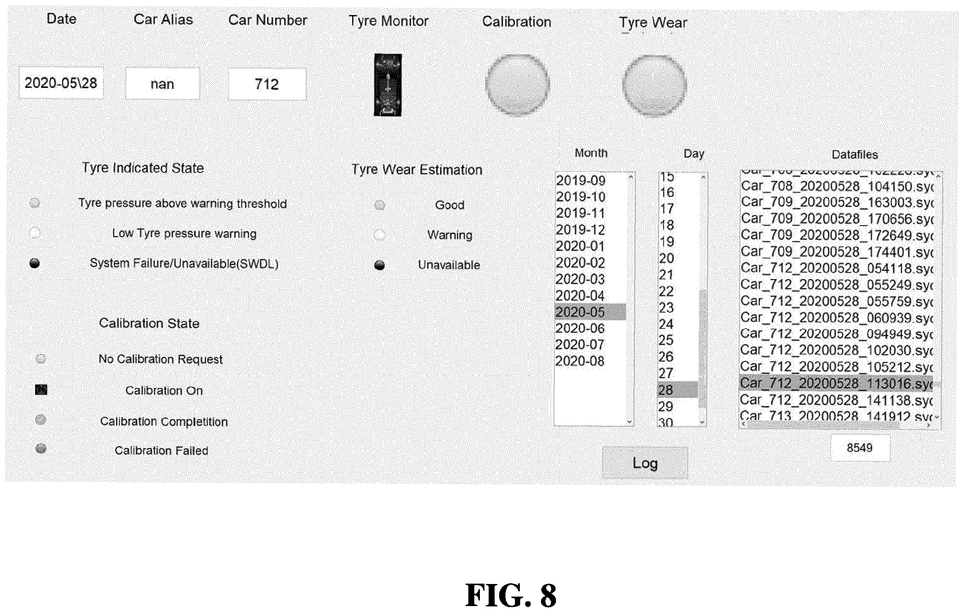

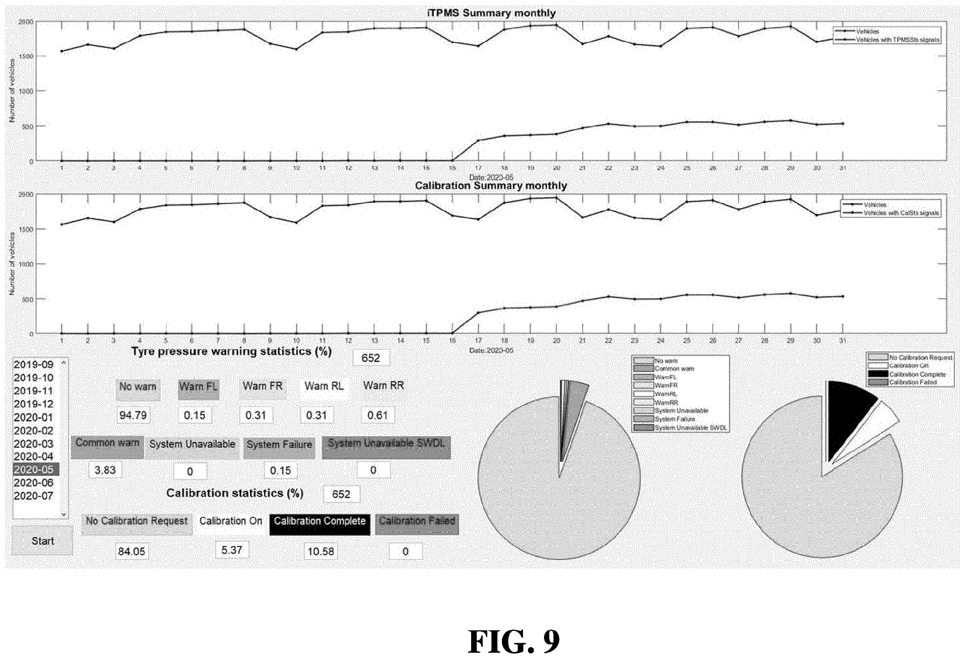

FIGs. 8 and 9 depict exemplary dashboard views according to one or more embodiments described herein. According to an embodiment, one or more systems herein can comprise a cloud-based vehicle fleet management system. In this regard, management of tire wear for an entire fleet of vehicles can be facilitated, such that vehicle safety can be improved, and vehicle down-time can be reduced.

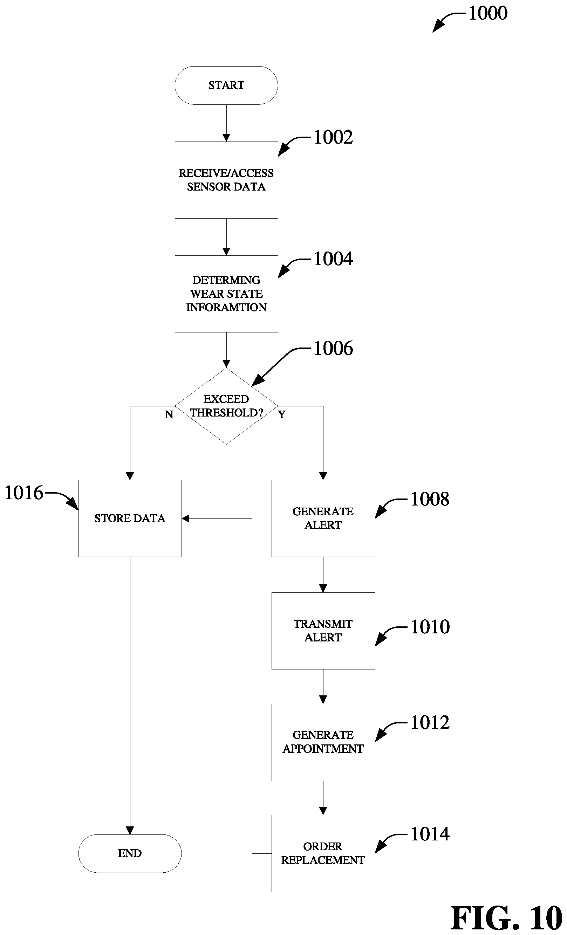

FIG. 10 illustrates a flow chart of an example, non-limiting flowchart of a process 1000 for tire wear monitoring in accordance with one or more embodiments described herein. At 1002, data can be received or accessed (e.g., from a sensor 114). At 1004, wear state information representative of a wear state of a tire of a vehicle based on an output from a sensor of the vehicle can be determined (e.g., by a determination component 108). At 1006, if determined wear exceeds (or is below in other embodiments) a tire wear threshold (e.g., Y at 1006), the process can proceed to 1008. If tire wear does not exceed the tire wear threshold (e.g., N at 1006) the process can proceed to 1016. At 1008, an alert signal associated with the wear state of the tire can be generated (e.g., by an alert component 110). At 1010, the alert signal and/or tire wear information can be transmitted (e.g., using the communication component 304) to a vehicle, user of a vehicle, fleet management system, repair facility, or other location/destination. At 1012, an appointment can be generated (e.g., using the appointment component 404, ordering component 504, and/or scheduling component 604). At 1014, a replacement tire can be ordered (e.g., using the ordering component 504). At 1016, data can be stored (e.g., associated with tire wear, thresholds, vehicle information, tire information, climate information, region information, alerts, appointments, repair facilities, or other suitable information) for future analysis (e.g., by artificial intelligence component 704).

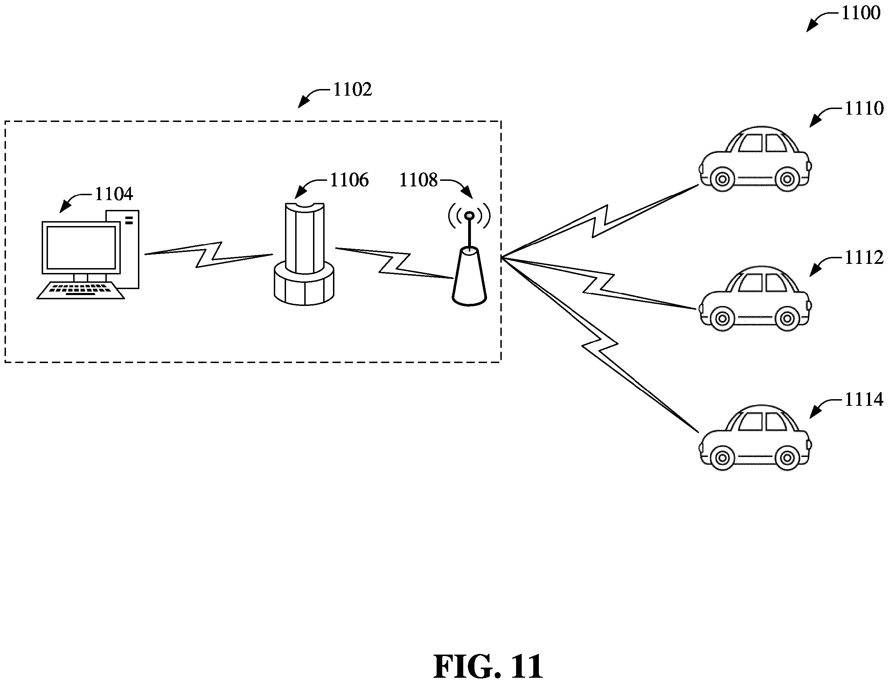

FIG. 11 illustrates a block diagram of an example, non-limiting tire wear monitoring system 1100 in accordance with one or more embodiments described herein. The tire wear monitoring system 1100 can comprise equipment 1102, which can comprise a terminal 1104, server 1106, communication device 1108. The tire wear monitoring system 1100 can comprise (or otherwise be associated with) vehicle 1110, vehicle 1112, and/or vehicle 1114. In this regard, a sensor of a vehicle (e.g., sensor 114 of a vehicle 1110) can output information to equipment 1102. According to an embodiment, equipment 1102 can comprise one or more components of the system 702. In this regard, communication device 1108 can be similar to the communication component 304. Further in this regard, the communication device 1108 can receive raw data output from a sensor 114 of the vehicle 1110. According to an embodiment, the server 1106 (e.g., comprising a memory and a processor) can be leveraged to facilitate one or more operations associated with the equipment 1102. According to additional embodiments, the terminal 1104 can be utilized for facilitating user interaction with a corresponding cloud-based tire monitoring system for fleets or autonomous vehicles. It is noted that the terminal 1104 (e.g., comprising a memory and a processor) can facilitate visualization of one or more dashboards depicted in FIGs. 8 and/or 9. In this regard terminal 1104 can comprise a visualization component. It is noted that systems herein (e.g., systems 100-700) can comprise such a visualization component, which can facilitate interaction with a corresponding tire wear monitoring system (e.g., for vehicle fleets and/or autonomous vehicles).

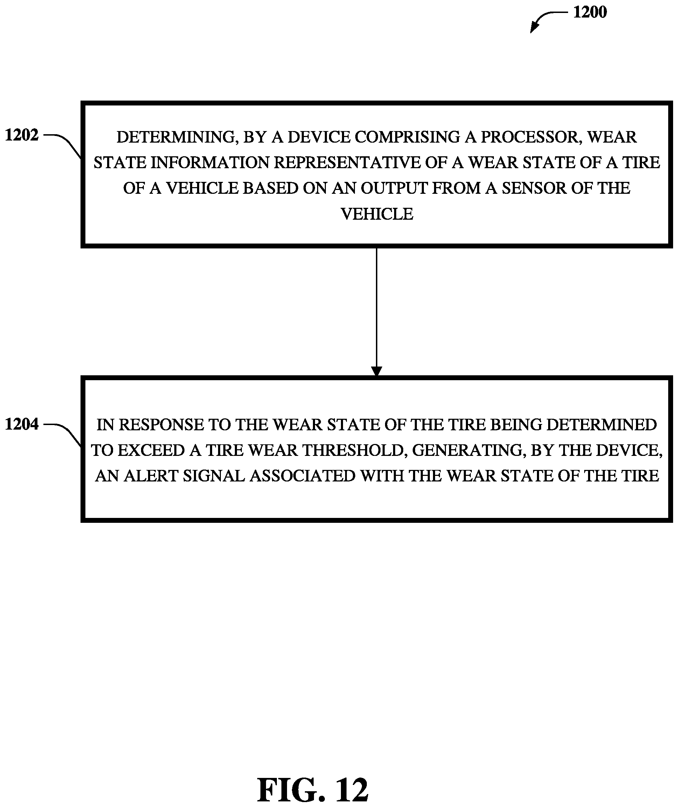

FIG. 12 illustrates a flow diagram of an example, non-limiting computer-implemented method 1200 in accordance with one or more embodiments described herein. Repetitive description of like elements and/or processes employed in respective embodiments is omitted for sake of brevity. At 1202, computer-implemented method 1200 can comprise determining, by a device comprising a processor, wear state information representative of a wear state of a tire of a vehicle based on an output from a sensor of the vehicle. At 1204, the computer-implemented method 1200 can in response to the wear state of the tire being determined to exceed a tire wear threshold, generating, by the device, an alert signal associated with the wear state of the tire.

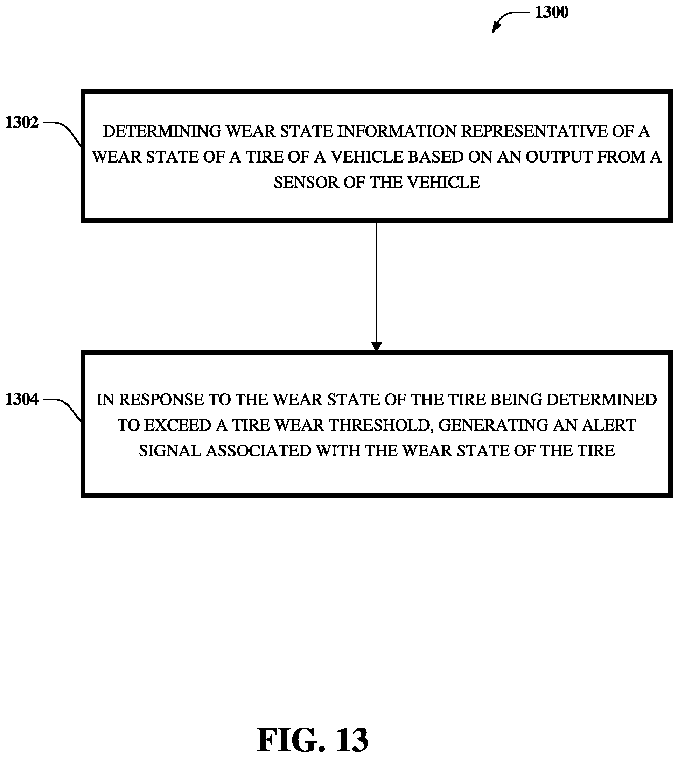

FIG. 13 illustrates a flow diagram of example, non-limiting non-transitory machine-readable medium, comprising executable instructions that, when executed by a processor, facilitate performance of operations 1300 in in accordance with one or more embodiments described herein. Repetitive description of like elements and/or processes employed in respective embodiments is omitted for sake of brevity. At 1302, the operations 1300 can comprise determining wear state information representative of a wear state of a tire of a vehicle based on an output from a sensor of the vehicle. At 1304, the operations 1300 can comprise in response to the wear state of the tire being determined to exceed a tire wear threshold, generating an alert signal associated with the wear state of the tire.

Systems described herein can be coupled (e.g., communicatively, electrically, operatively, optically, etc.) to one or more local or remote (e.g., external) systems, sources, and/or devices (e.g., electronic control systems (ECU), classical and/or quantum computing devices, communication devices, etc.). For example, system 102 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some embodiments, system herein can be coupled (e.g., communicatively, electrically, operatively, optically, etc.) to one or more local or remote (e.g., external) systems, sources, and/or devices (e.g., electronic control units (ECU), classical and/or quantum computing devices, communication devices, etc.) via a network. In these embodiments, such a network can comprise one or more wired and/or wireless networks, including, but not limited to, a cellular network, a wide area network (WAN) (e.g., the Internet), and/or a local area network (LAN). For example, system 102 can communicate with one or more local or remote (e.g., external) systems, sources, and/or devices, for instance, computing devices using such a network, which can comprise virtually any desired wired or wireless technology, including but not limited to: powerline ethernet, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, 6LoWPAN (IPv6 over Low power Wireless Area Networks), Z-Wave, an ANT, an ultra-wideband (UWB) standard protocol, and/or other proprietary and non-proprietary communication protocols. In this example, system 102 can thus include hardware (e.g., a central processing unit (CPU), a transceiver, a decoder, an antenna (e.g., a ultra-wideband (UWB) antenna, a BLUETOOTH^{®} low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

System herein can comprise one or more computer and/or machine readable, writable, and/or executable components and/or instructions that, when executed by processor (e.g., a processor 106 which can comprise a classical processor, a quantum processor, etc.), can facilitate performance of operations defined by such component(s) and/or instruction(s). Further, in numerous embodiments, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous embodiments, system herein and/or any components associated therewith as disclosed herein, can employ a processor (e.g., processor 106) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such embodiments are envisioned. For example, a system (e.g., a system 702 or any other system or device described herein) can comprise a computing device, a general-purpose computer, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, a cell phone, a smart phone, a consumer appliance and/or instrumentation, an industrial and/or commercial device, a digital assistant, a multimedia Internet enabled phone, a multimedia players, and/or another type of device.

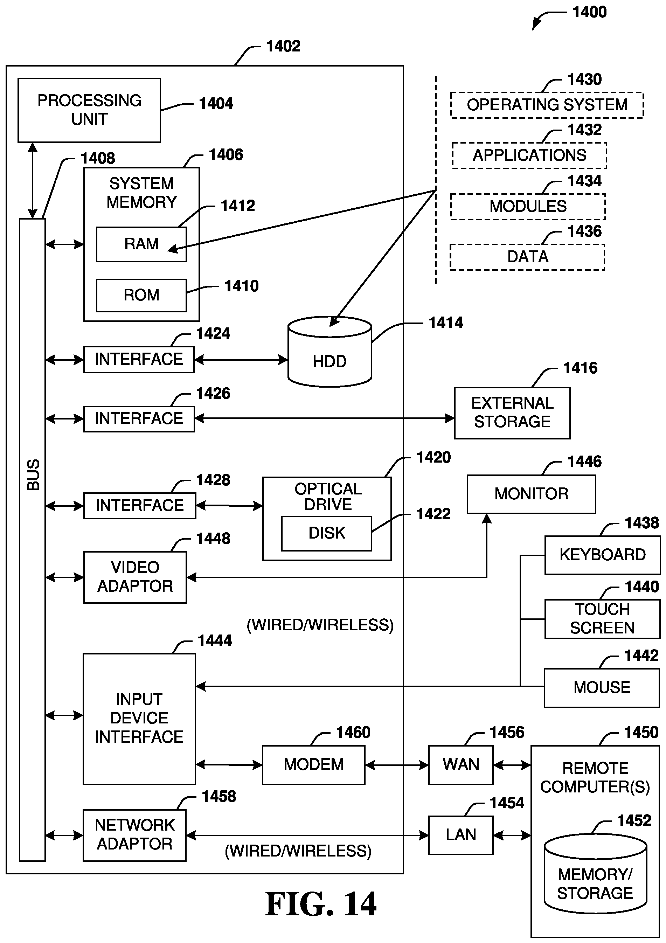

In order to provide additional context for various embodiments described herein, FIG. 14 and the following discussion are intended to provide a brief, general description of a suitable computing environment 1400 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 14, the example environment 1400 for implementing various embodiments of the aspects described herein includes a computer 1402, the computer 1402 including a processing unit 1404, a system memory 1406 and a system bus 1408. The system bus 1408 couples system components including, but not limited to, the system memory 1406 to the processing unit 1404. The processing unit 1404 can be any of various commercially available processors. Dual microprocessors and other multi-processor architectures can also be employed as the processing unit 1404.

The system bus 1408 can be any of several types of bus structure that can further interconnect to a memory bus (with or without a memory controller), a peripheral bus, and a local bus using any of a variety of commercially available bus architectures. The system memory 1406 includes ROM 1410 and RAM 1412. A basic input/output system (BIOS) can be stored in a non-volatile memory such as ROM, erasable programmable read only memory (EPROM), EEPROM, which BIOS contains the basic routines that help to transfer information between elements within the computer 1402, such as during startup. The RAM 1412 can also include a high-speed RAM such as static RAM for caching data.

The computer 1402 further includes an internal hard disk drive (HDD) 1414 (e.g., EIDE, SATA), one or more external storage devices 1416 (e.g., a magnetic floppy disk drive (FDD) 1416, a memory stick or flash drive reader, a memory card reader, etc.) and an optical disk drive 1420 (e.g., which can read or write from a CD-ROM disc, a DVD, a BD, etc.). While the internal HDD 1414 is illustrated as located within the computer 1402, the internal HDD 1414 can also be configured for external use in a suitable chassis (not shown). Additionally, while not shown in environment 1400, a solid-state drive (SSD) could be used in addition to, or in place of, an HDD 1414. The HDD 1414, external storage device(s) 1416 and optical disk drive 1420 can be connected to the system bus 1408 by an HDD interface 1424, an external storage interface 1426 and an optical drive interface 1428, respectively. The interface 1424 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1402, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1412, including an operating system 1430, one or more application programs 1432, other program modules 1434 and program data 1436. All or portions of the operating system, applications, modules, and/or data can also be cached in the RAM 1412. The systems and methods described herein can be implemented utilizing various commercially available operating systems or combinations of operating systems.

Computer 1402 can optionally comprise emulation technologies. For example, a hypervisor (not shown) or other intermediary can emulate a hardware environment for operating system 1430, and the emulated hardware can optionally be different from the hardware illustrated in FIG. 14. In such an embodiment, operating system 1430 can comprise one virtual machine (VM) of multiple VMs hosted at computer 1402. Furthermore, operating system 1430 can provide runtime environments, such as the Java runtime environment or the .NET framework, for applications 1432. Runtime environments are consistent execution environments that allow applications 1432 to run on any operating system that includes the runtime environment. Similarly, operating system 1430 can support containers, and applications 1432 can be in the form of containers, which are lightweight, standalone, executable packages of software that include, e.g., code, runtime, system tools, system libraries and settings for an application.

Further, computer 1402 can be enable with a security module, such as a trusted processing module (TPM). For instance, with a TPM, boot components hash next in time boot components, and wait for a match of results to secured values, before loading a next boot component. This process can take place at any layer in the code execution stack of computer 1402, e.g., applied at the application execution level or at the operating system (OS) kernel level, thereby enabling security at any level of code execution.

A user can enter commands and information into the computer 1402 through one or more wired/wireless input devices, e.g., a keyboard 1438, a touch screen 1440, and a pointing device, such as a mouse 1442. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1404 through an input device interface 1444 that can be coupled to the system bus 1408, but can be connected by other interfaces, such as a parallel port, an IEEE 1394 serial port, a game port, a USB port, an IR interface, a BLUETOOTH^{®} interface, etc.

A monitor 1446 or other type of display device can be also connected to the system bus 1408 via an interface, such as a video adapter 1448. In addition to the monitor 1446, a computer typically includes other peripheral output devices (not shown), such as speakers, printers, etc.

The computer 1402 can operate in a networked environment using logical connections via wired and/or wireless communications to one or more remote computers, such as a remote computer(s) 1450. The remote computer(s) 1450 can be a workstation, a server computer, a router, a personal computer, portable computer, microprocessor-based entertainment appliance, a peer device or other common network node, and typically includes many or all of the elements described relative to the computer 1402, although, for purposes of brevity, only a memory/storage device 1452 is illustrated. The logical connections depicted include wired/wireless connectivity to a local area network (LAN) 1454 and/or larger networks, e.g., a wide area network (WAN) 1456. Such LAN and WAN networking environments are commonplace in offices and companies, and facilitate enterprise-wide computer networks, such as intranets, all of which can connect to a global communications network, e.g., the Internet.

When used in a LAN networking environment, the computer 1402 can be connected to the local network 1454 through a wired and/or wireless communication network interface or adapter 1458. The adapter 1458 can facilitate wired or wireless communication to the LAN 1454, which can also include a wireless access point (AP) disposed thereon for communicating with the adapter 1458 in a wireless mode.

When used in a WAN networking environment, the computer 1402 can include a modem 1460 or can be connected to a communications server on the WAN 1456 via other means for establishing communications over the WAN 1456, such as by way of the Internet. The modem 1460, which can be internal or external and a wired or wireless device, can be connected to the system bus 1408 via the input device interface 1444. In a networked environment, program modules depicted relative to the computer 1402 or portions thereof, can be stored in the remote memory/storage device 1452. It will be appreciated that the network connections shown are example and other means of establishing a communications link between the computers can be used.

When used in either a LAN or WAN networking environment, the computer 1402 can access cloud storage systems or other network-based storage systems in addition to, or in place of, external storage devices 1416 as described above. Generally, a connection between the computer 1402 and a cloud storage system can be established over a LAN 1454 or WAN 1456 e.g., by the adapter 1458 or modem 1460, respectively. Upon connecting the computer 1402 to an associated cloud storage system, the external storage interface 1426 can, with the aid of the adapter 1458 and/or modem 1460, manage storage provided by the cloud storage system as it would other types of external storage. For instance, the external storage interface 1426 can be configured to provide access to cloud storage sources as if those sources were physically connected to the computer 1402.

The computer 1402 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

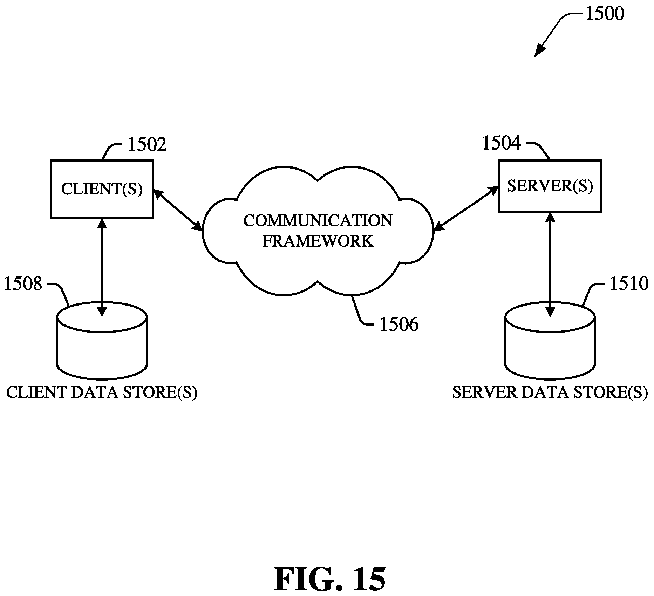

Referring now to FIG. 15, there is illustrated a schematic block diagram of a computing environment 1500 in accordance with this specification. The system 1500 includes one or more client(s) 1502, (e.g., computers, smart phones, tablets, cameras, PDA's). The client(s) 1502 can be hardware and/or software (e.g., threads, processes, computing devices). The client(s) 1502 can house cookie(s) and/or associated contextual information by employing the specification, for example.

The system 1500 also includes one or more server(s) 1504. The server(s) 1504 can also be hardware or hardware in combination with software (e.g., threads, processes, computing devices). The servers 1504 can house threads to perform transformations of media items by employing aspects of this disclosure, for example. One possible communication between a client 1502 and a server 1504 can be in the form of a data packet adapted to be transmitted between two or more computer processes wherein data packets can include coded analyzed headspaces and/or input. The data packet can include a cookie and/or associated contextual information, for example. The system 1500 includes a communication framework 1506 (*e.g.,* a global communication network such as the Internet) that can be employed to facilitate communications between the client(s) 1502 and the server(s) 1504.

Communications can be facilitated *via* a wired (including optical fiber) and/or wireless technology. The client(s) 1502 are operatively connected to one or more client data store(s) 1508 that can be employed to store information local to the client(s) 1502 (*e.g.,* cookie(s) and/or associated contextual information). Similarly, the server(s) 1504 are operatively connected to one or more server data store(s) 1510 that can be employed to store information local to the servers 1504.

In one exemplary implementation, a client 1502 can transfer an encoded file, (e.g., encoded media item), to server 1504. Server 1504 can store the file, decode the file, or transmit the file to another client 1502. It is to be appreciated, that a client 1502 can also transfer uncompressed file to a server 1504 and server 1504 can compress the file and/or transform the file in accordance with this disclosure. Likewise, server 1504 can encode information and transmit the information via communication framework 1506 to one or more clients 1502.

The illustrated aspects of the invention can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. Therefore, the disclosed subject matter should not be limited to any single embodiment described herein, but rather should be construed in breadth and scope in accordance with the appended claims below.

Further aspects of the invention are provided by the subject matter of the following:

The computer-implemented method may further comprise
adjusting the sensor to known pressure information of the tire received from a calibration device.

The computer-implemented method may further comprise:
transmitting the wear state information to a repair facility registered with the vehicle.

The operations of the non-transitory machine-readable medium may further comprise:
generating an appointment for the vehicle at a repair facility registered with the vehicle for replacement of the tire with a replacement tire.

The operations of the computer program product may further comprise:
generating an order for the replacement tire, wherein the appointment is based on availability information representative of an availability of the replacement tire.

## Claims

1. A device (102, 202, 302, 402, 502, 602, 702), comprising:
a memory (104); and
a processor (106) operatively coupled to the memory (104) and comprising computer executable components comprising:
a determination component (108) that determines wear state information representative of a wear state of a tire of a vehicle (1110, 1112, 1114) based on an output from a sensor (114) of the vehicle (1110, 1112, 1114); and
an alert component (110) that, in response to the wear state of the tire being determined to exceed a tire wear threshold, generates an alert signal associated with the wear state of the tire,
**characterized in that** the sensor (114) comprises a brake force sensor, and wherein the output comprises a braking force applied to the vehicle (1110, 1112, 1114).

2. The device of claim 1, wherein the wear state information is determined, by the determination component (108), using a tire wear model generated using machine learning applied to past tire wear information representative of tire wear of other tires.

3. The device of claim 1, wherein the sensor (114) comprises a wheel speed sensor, and wherein the output comprises a rotational velocity of the tire.

4. The device of claim 1, wherein the sensor (114) comprises a direct tire pressure sensor for the tire, and wherein the output comprises a tire pressure of the tire.

5. The device of claim 1, wherein the sensor (114) comprises a linear velocity sensor, and wherein the output comprises a lateral velocity of the vehicle and longitudinal velocity of the vehicle (1110, 1112, 1114).

6. The device of claim 1, wherein the wear state information is based on a slip ratio of the tire.

7. The device of claim 1, wherein the computer executable components further comprise:
a calibration component (204) that calibrates the sensor (114) of the vehicle (1110, 1112, 1114).

8. The device of claim 7, wherein the calibration component (204) adjusts the sensor (114) to known pressure information of the tire received from a calibration device.

9. The device of claim 1, wherein the computer executable components further comprise:
a communication component (304) that transmits the alert signal to the vehicle (1110, 1112, 1114).

10. The device of claim 1, wherein the computer executable components further comprise:
a communication component (304) that transmits the wear state information to a repair facility registered with the vehicle (1110, 1112, 1114).

11. The device of claim 10, wherein the computer executable components further comprise:
an appointment component (404) that generates an appointment for the vehicle (1110, 1112, 1114) at the repair facility for replacement of the tire with a replacement tire.

12. The device of claim 11, wherein the computer executable components further comprise:
an ordering component (504) that generates an order for the replacement tire, wherein the appointment is based on an availability information representative of an availability of the replacement tire.

13. The device of claim 12, wherein the computer executable components further comprise:
a scheduling component (604) that determines schedule information representative of a schedule associated with the vehicle (1110, 1112, 1114), wherein the appointment is further based on the schedule.

14. A computer-implemented method, comprising:
determining (1202), by a device comprising a processor (106), wear state information representative of a wear state of a tire of a vehicle (1110, 1112, 1114) based on an output from a sensor (114) of the vehicle (1110, 1112, 1114); and
in response to the wear state of the tire being determined to exceed a tire wear threshold, generating (1204), by the device, an alert signal associated with the wear state of the tire, **characterized in that** the sensor (114) comprises a brake force sensor, and wherein the output comprises a braking force applied to the vehicle (1110, 1112, 1114).

15. A non-transitory machine-readable medium, comprising: executable instructions that, when executed by a processor (106), facilitate performance of operations, comprising determining wear state information representative of a wear state of a tire of a vehicle (1110, 1112, 1114) based on an output from a sensor (114) of the vehicle (1110, 1112, 1114), and in response to the wear state of the tire being determined to exceed a tire wear threshold, generating an alert signal associated with the wear state of the tire, **characterized in that** the sensor (114) comprises a brake force sensor, and wherein the output comprises a braking force applied to the vehicle (1110, 1112, 1114).

## Patentansprüche

1. Vorrichtung (102, 202, 302, 402, 502, 602, 702), die Folgendes umfasst:
einen Speicher (104); und
einen Prozessor (106), der operativ mit dem Speicher (104) gekoppelt ist und computerausführbare Komponenten umfasst, die Folgendes umfassen:
eine Bestimmungskomponente (108), die Verschleißzustandsinformationen bestimmt, die einen Verschleißzustand eines Reifens eines Fahrzeugs (1110, 1112, 1114) repräsentieren, basierend auf einer Ausgabe von einem Sensor (114) des Fahrzeugs (1110, 1112, 1114); und
eine Warnkomponente (110), die als Reaktion darauf, dass der Verschleißzustand des Reifens als eine Reifenverschleißschwelle überschreitend bestimmt wird, ein Warnsignal erzeugt, das mit dem Verschleißzustand des Reifens assoziiert ist,
**dadurch gekennzeichnet, dass** der Sensor (114) einen Bremskraftsensor umfasst, und wobei die Ausgabe eine auf das Fahrzeug (1110, 1112, 1114) ausgeübte Bremskraft umfasst.

2. Vorrichtung nach Anspruch 1, wobei die Verschleißzustandsinformation von der Bestimmungskomponente (108) unter Verwendung eines Reifenverschleißmodells bestimmt wird, das unter Verwendung von maschinellem Lernen erzeugt wird, das auf vergangene Reifenverschleißinformationen angewendet wird, die für den Reifenverschleiß anderer Reifen repräsentativ sind.

3. Vorrichtung nach Anspruch 1, wobei der Sensor (114) einen Raddrehzahlsensor umfasst, und wobei die Ausgabe eine Rotationsgeschwindigkeit des Reifens umfasst.

4. Vorrichtung nach Anspruch 1, wobei der Sensor (114) einen direkten Reifendrucksensor für den Reifen umfasst, und wobei die Ausgabe einen Reifendruck des Reifens umfasst.

5. Vorrichtung nach Anspruch 1, wobei der Sensor (114) einen linearen Geschwindigkeitssensor umfasst, und wobei die Ausgabe eine Quergeschwindigkeit des Fahrzeugs und eine Längsgeschwindigkeit des Fahrzeugs (1110, 1112, 1114) umfasst.

6. Vorrichtung nach Anspruch 1, wobei die Verschleißzustandsinformation auf einem Schlupfverhältnis des Reifens basiert.

7. Vorrichtung nach Anspruch 1, wobei die computerausführbaren Komponenten ferner Folgendes umfassen:
eine Kalibrierungskomponente (204), die den Sensor (114) des Fahrzeugs (1110, 1112, 1114) kalibriert.

8. Vorrichtung nach Anspruch 7, wobei die Kalibrierungskomponente (204) den Sensor (114) auf bekannte Druckinformationen des Reifens einstellt, die von einer Kalibrierungsvorrichtung empfangen werden.

9. Vorrichtung nach Anspruch 1, wobei die computerausführbaren Komponenten ferner Folgendes umfassen:
eine Kommunikationskomponente (304), die das Warnsignal an das Fahrzeug (1110, 1112, 1114) überträgt.

10. Vorrichtung nach Anspruch 1, wobei die computerausführbaren Komponenten ferner Folgendes umfassen:
eine Kommunikationskomponente (304), die die Informationen über den Verschleißzustand an eine für das Fahrzeug registrierte Reparaturwerkstatt (1110, 1112, 1114) überträgt.

11. Vorrichtung nach Anspruch 10, wobei die computerausführbaren Komponenten ferner Folgendes umfassen:
eine Terminkomponente (404), die einen Termin für das Fahrzeug (1110, 1112, 1114) in der Reparaturwerkstatt zum Austausch des Reifens durch einen Ersatzreifen erzeugt.

12. Vorrichtung nach Anspruch 11, wobei die computerausführbaren Komponenten ferner Folgendes umfassen:
eine Bestellkomponente (504), die eine Bestellung für den Ersatzreifen erzeugt, wobei der Termin auf einer Verfügbarkeitsinformation basiert, die eine Verfügbarkeit des Ersatzreifens repräsentiert.

13. Vorrichtung nach Anspruch 12, wobei die computerausführbaren Komponenten ferner Folgendes umfassen:
eine Planungskomponente (604), die Planinformationen bestimmt, die für einen mit dem Fahrzeug (1110, 1112, 1114) verbundenen Plan repräsentativ sind, wobei der Termin ferner auf dem Plan basiert.

14. Computer-implementiertes Verfahren, das Folgendes umfasst:
Bestimmen (1202), durch eine Vorrichtung, die einen Prozessor (106) umfasst, von Verschleißzustandsinformationen, die einen Verschleißzustand eines Reifens eines Fahrzeugs (1110, 1112, 1114) repräsentieren, basierend auf einer Ausgabe von einem Sensor (114) des Fahrzeugs (1110, 1112, 1114); und
als Reaktion darauf, dass der Verschleißzustand des Reifens als eine Reifenverschleißschwelle überschreitend bestimmt wird, Erzeugen (1204) eines Warnsignals durch die Vorrichtung, das mit dem Verschleißzustand des Reifens assoziiert ist,
**dadurch gekennzeichnet, dass** der Sensor (114) einen Bremskraftsensor umfasst, und wobei die Ausgabe eine auf das Fahrzeug (1110, 1112, 1114) ausgeübte Bremskraft umfasst.

15. Nicht-transitorisches maschinenlesbares Medium, umfassend: ausführbare Anweisungen, die, wenn sie von einem Prozessor (106) ausgeführt werden, die Durchführung von Operationen ermöglichen, die das Bestimmen von Verschleißzustandsinformationen, die einen Verschleißzustand eines Reifens eines Fahrzeugs (1110, 1112, 1114) repräsentieren, auf der Grundlage einer Ausgabe von einem Sensor (114) des Fahrzeugs (1110, 1112, 1114) umfassen, und in Reaktion darauf, dass der Verschleißzustand des Reifens als eine Reifenverschleißschwelle überschreitend bestimmt wird, Erzeugen eines Warnsignals, das mit dem Verschleißzustand des Reifens verbunden ist, **dadurch gekennzeichnet, dass** der Sensor (114) einen Bremskraftsensor umfasst, und wobei die Ausgabe eine auf das Fahrzeug (1110, 1112, 1114) ausgeübte Bremskraft umfasst.

## Revendications

1. Dispositif (102, 202, 302, 402, 502, 602, 702), comprenant :
une mémoire (104) ; et
un processeur (106) couplé à la mémoire (104) de manière opérationnelle et comprenant des composants exécutables par ordinateur comprenant :
un composant de détermination (108) qui détermine des informations d'état d'usure représentatives d'un état d'usure d'un pneumatique d'un véhicule (1110, 1112, 1114) sur la base d'une sortie provenant d'un capteur (114) du véhicule (1110, 1112, 1114) ; et
un composant d'alerte (110) qui, en réaction à la détermination que l'état d'usure du pneumatique dépasse un seuil d'usure de pneumatique, génère un signal d'alerte associé à l'état d'usure du pneumatique,
**caractérisé en ce que** le capteur (114) comprend un capteur de force de freinage, et dans lequel la sortie comprend une force de freinage appliquée au véhicule (1110, 1112, 1114).

2. Dispositif selon la revendication 1, dans lequel les informations d'état d'usure sont déterminées, par le composant de détermination (108), en utilisant un modèle d'usure de pneumatique généré en utilisant un apprentissage automatique appliqué à des informations d'usure de pneumatique antérieures représentatives de l'usure de pneumatique d'autres pneumatiques.

3. Dispositif selon la revendication 1, dans lequel le capteur (114) comprend un capteur de vitesse de roue, et dans lequel la sortie comprend une vitesse de rotation du pneumatique.

4. Dispositif selon la revendication 1, dans lequel le capteur (114) comprend un capteur de pression de pneumatique directe pour le pneumatique, et dans lequel la sortie comprend une pression de pneumatique du pneumatique.

5. Dispositif selon la revendication 1, dans lequel le capteur (114) comprend un capteur de vitesse linéaire, et dans lequel la sortie comprend une vitesse latérale du véhicule et une vitesse longitudinale du véhicule (1110, 1112, 1114) .

6. Dispositif selon la revendication 1, dans lequel les informations d'état d'usure sont basées sur un taux de glissement du pneumatique.

7. Dispositif selon la revendication 1, dans lequel les composants exécutables par ordinateur comprennent en outre :
un composant d'étalonnage (204) qui étalonne le capteur (114) du véhicule (1110, 1112, 1114).

8. Dispositif selon la revendication 7, dans lequel le composant d'étalonnage (204) règle le capteur (114) à des informations de pression connues du pneumatique reçues d'un dispositif d'étalonnage.

9. Dispositif selon la revendication 1, dans lequel les composants exécutables par ordinateur comprennent en outre :
un composant de communication (304) qui transmet le signal d'alerte au véhicule (1110, 1112, 1114).

10. Dispositif selon la revendication 1, dans lequel les composants exécutables par ordinateur comprennent en outre :
un composant de communication (304) qui transmet les informations d'état d'usure à une installation de réparation enregistrée avec le véhicule (1110, 1112, 1114).

11. Dispositif selon la revendication 10, dans lequel les composants exécutables par ordinateur comprennent en outre :
un composant de prise de rendez-vous (404) qui génère un rendez-vous pour le véhicule (1110, 1112, 1114) dans l'installation de réparation en vue d'un remplacement du pneumatique par un pneumatique de remplacement.

12. Dispositif selon la revendication 11, dans lequel les composants exécutables par ordinateur comprennent en outre :
un composant de commande (504) qui génère une commande pour le pneumatique de remplacement, dans lequel le rendez-vous est basé sur une information de disponibilité représentative d'une disponibilité du pneumatique de remplacement.

13. Dispositif selon la revendication 12, dans lequel les composants exécutables par ordinateur comprennent en outre :
un composant de planification (604) qui détermine des informations de planification représentatives d'une planification associée au véhicule (1110, 1112, 1114), dans lequel le rendez-vous est en outre basé sur la planification.

14. Procédé mis en œuvre par ordinateur, comprenant de :
déterminer (1202), par un dispositif comprenant un processeur (106), des informations d'état d'usure représentatives d'un état d'usure d'un pneumatique d'un véhicule (1110, 1112, 1114) sur la base d'une sortie provenant d'un capteur (114) du véhicule (1110, 1112, 1114) ; et
en réaction à la détermination que l'état d'usure de pneumatique dépasse un seuil d'usure de pneumatique, générer (1204), par le dispositif, un signal d'alerte associé à l'état d'usure du pneumatique, **caractérisé en ce que** le capteur (114) comprend un capteur de force de freinage, et dans lequel la sortie comprend une force de freinage appliquée au véhicule (1110, 1112, 1114).

15. Support non transitoire lisible par machine, comprenant : des instructions exécutables qui, lorsqu'elles sont exécutées par un processeur (106), facilitent l'exécution d'opérations, comprenant de déterminer des informations d'état d'usure représentatives d'un état d'usure d'un pneumatique d'un véhicule (1110, 1112, 1114) sur la base d'une sortie provenant d'un capteur (114) du véhicule (1110, 1112, 1114), et en réaction à la détermination que l'état d'usure du pneumatique dépasse un seuil d'usure de pneumatique, générer un signal d'alerte associé à l'état d'usure du pneumatique, **caractérisé en ce que** le capteur (114) comprend un capteur de force de freinage, et dans lequel la sortie comprend une force de freinage appliquée au véhicule (1110, 1112, 1114).
